**Europäisches Patentamt**

**European Patent Office**

**Office européen des brevets**

(11) Publication number: **0 066 757**
**B1**

(12) # EUROPEAN PATENT SPECIFICATION

(45) Date of publication of patent specification: **27.08.86**

(51) Int. Cl.⁴: **G 21 F 9/00**, G 21 F 9/30

(21) Application number: **82104471.6**

(22) Date of filing: **21.05.82**

(54) **An apparatus for discharging radioactive waste from its container.**

(30) Priority: **22.05.81 JP 76692/81**

(43) Date of publication of application:
**15.12.82 Bulletin 82/50**

(45) Publication of the grant of the patent:
**27.08.86 Bulletin 86/35**

(84) Designated Contracting States:
**DE FR GB**

(56) References cited:
**DE-A-2 703 196**
**FR-A-1 428 904**
**FR-A-2 252 978**
**FR-A-2 468 980**
**US-A-3 756 372**
**US-A-4 071 155**

(73) Proprietor: **NGK INSULATORS, LTD.**
**2-56, Suda-cho, Mizuho-ku**
**Nagoya-shi, Aichi 467 (JP)**

(72) Inventor: **Okamoto, Magoji**
**36-1, Hagiyama-Cho 3-chome**
**Mizuho-ku Nagoya City (JP)**
Inventor: **Maekawa, Norio**
**21-19, Shimizu 2-Chome Suginami-ku**
**Tokyo (JP)**

(74) Representative: **Füchsle, Klaus, Dipl.-Ing. et al**
**Hoffmann . Eitle & Partner Patentanwälte**
**Arabellastrasse 4**
**D-8000 München 81 (DE)**

Courier Press, Leamington Spa, England.

**Description**

This invention relates to an apparatus for discharging radioactive waste filled and stored in a storage container with safety and security.

In general, various radioactive waste solids unavoidably produced in nuclear power stations, such as polyethylene or paper sheets, rags, discarded working clothes, gloves and the like are pressed and filled in storage containers such as drums or cans which are stored in storehouses. In order to prevent these radioactive waste solids from decaying or decomposing or scattering over surroundings as a result of a fire and in order to greatly condense them and increase their densities, these waste solids are generally burned to ashes which together with incombustible substances, are packed in cement or asphalt or encapsulated in glass. For this purpose, the radioactive waste pressed and stored in the storage containers must be safely and securely taken out of the storage containers.

Up to the present, the radioactive waste has been manually taken out of the storage container. However, as the waste is tightly pressed and filled in the storage container, it takes much time and labor to take the waste out of the container and what is worse still operators are likely to be exposed to radiation emitted directly from the radioactive waste or to inhale the dusty radioactive waste.

Screw type discharging apparatuses may be considered as mechanical ones. With such screw type apparatuses, however, since the radioactive waste filled in the storage container is discharged in bulk, it is difficult to remove incombustible substances from the waste before burning it and therefore uniform burning of the waste cannot be achieved.

It is, accordingly, an object of the present invention to overcome the disadvantages in the prior art apparatus for discharging the radioactive waste from its container and the present invention relates to a safe, reliable and automatic mechanical apparatus.

According to the present invention, an apparatus for discharging a radioactive waste from its container is as claimed in claim 1.

For a better understanding of the invention, reference is made to the accompanying drawings, in which:

Fig. 1 is an explanatory plan view of one embodiment of the waste discharging apparatus according to the invention;

Fig. 2 is an explanatory side view of the apparatus shown in Fig. 1; and

Figs. 3a—3e are side views of the apparatus shown in Fig. 1 for explaining the respective steps of the operation of the apparatus.

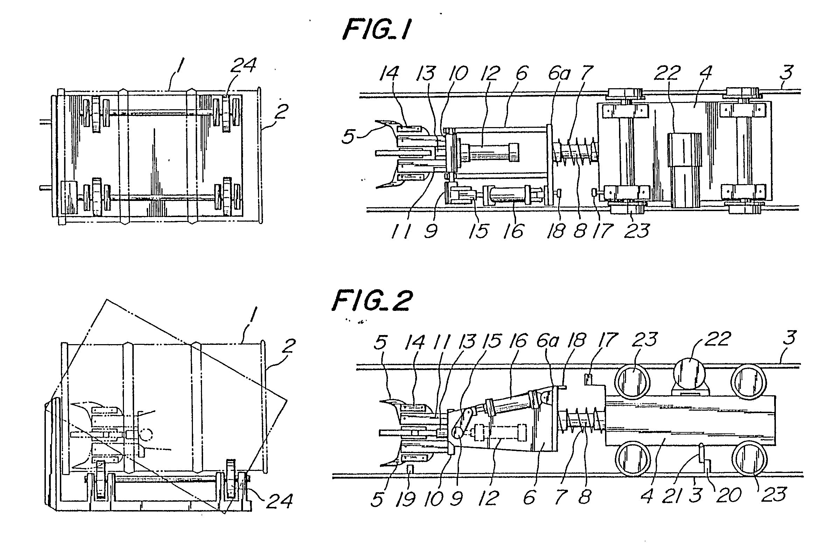

Referring to Figs. 1 and 2 illustrating a preferred embodiment of the invention, opposite an opening 2 of a storage container such as a drum which can accommodate therein pressed radioactive waste are located rails 3 on which is arranged a forwardly and rearwardly movable truck 4 provided with wheels 23 and a motor 22 as driving means for the truck. The truck 4 further comprises at its front end claws 5 connected thereto and capable of closing and opening for seizing and taking the pressed and packed waste out of the storage container 1. The claws 5 or seizing means comprise a plurality of, preferably four, claws adapted to be closed and opened by a mechanism later explained in detail. A preferably U-shaped support arm 6 is connected to the truck 4 by a rod 8 which passes through a spring 7 located between the arm and truck such that the support arm 6 is movable toward and away from the truck 4. As later explained, when the truck 4 moves toward the support arm 6 to shorten the distance therebetween, the spring is compressed to permit the rod 8 to enter the truck 4. The U-shaped support arm 6 carries on its front end a support plate 10 supported at its ends, at which one end is provided with a rotary shaft 9. To the support plate 10 are integrally fixed claw support rods 11 (preferably four) for the claws 5 and a first cylinder 12 for closing and opening the claws 5.

The first cylinder 12 includes a rod 13 extending through the support plate 10 and connected to curved portions of the respective claws 5 by connecting rods 14. An arm 15 is fixed to the rotary shaft 9. Between the other end of the arm 15 and an outward extension 6a of a bottom of the U-shaped support arm 6 is fixedly arranged a second cylinder 16 for vertically pivotally moving the claws 5 together with the support plate 10 about the rotary shaft 9. The first and second cylinders 12 and 16 are pneumatically or hydraulically operated in reciprocative movements for closing and opening the claws 5 or seizing means and tilting downwardly the seizing means together with the support plate 10.

Moreover, the truck 4 is provided on the side of the claws 5 with a pressing force detector 17 including a proximity switch or contactless switch for detecting the pressing force acting upon the waste by the claws 5 derived from the movement of the truck 4 toward the container 1. Facing the pressing force detector 17 a dog 18 is provided on the extension 6a of the support arm 6 for actuating the detector 17. A forward end limit switch 19 and a backward end limit switch 20 for the truck 4 are provided in place on a base frame (not shown) and a dog 21 is located on the truck 4 for actuating the limit switches 19 and 20.

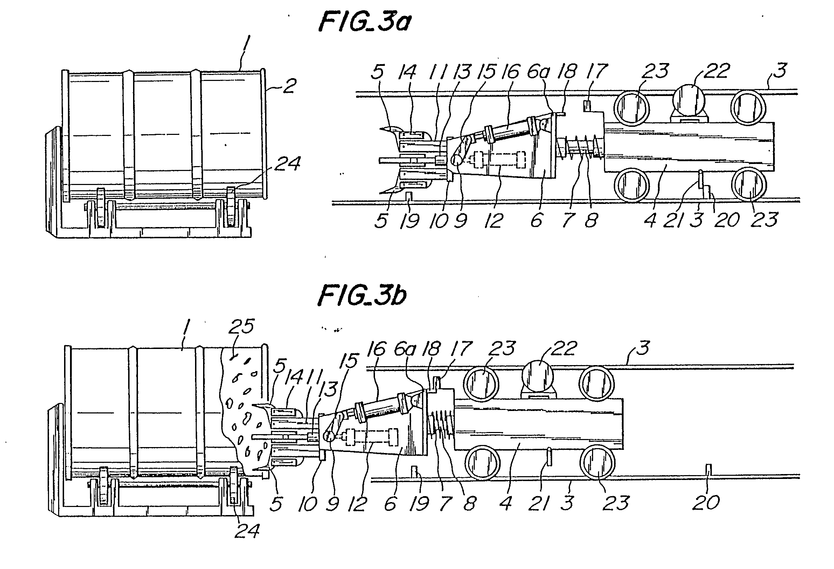

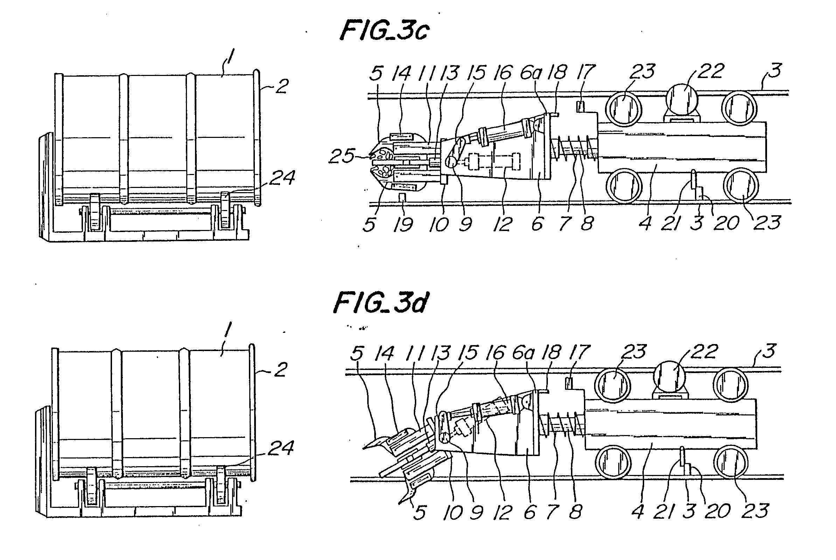

The operation of the apparatus thus assembled according to the invention will be explained hereinafter referring to Figs. 3a—3e.

The storage container 1 such as a drum which can be filled with radioactive waste is horizontally supported on a storage container support means 24 with the opening 2 opened and opposite to the claws 5 (Fig. 3a). The truck 4 is advanced on the rails 3 by energization of the truck driving motor 22 to bring the claws 5 into contact with the waste 25 filled in the container 1. The truck 4 is further advanced to force the claws 5 against and into the waste 25 so that a reaction from the waste forces the rod 8 into the truck 4 against the force of the spring 7, with the result that the support arm 6 approaches the truck 4 until the dog 18 on the extension 6a of the support arm 6 contacts the pressing force detector 17 provided on the truck 4. At this moment, the pressing force detector 17 produces a signal deenergizing the truck driving motor 22 to stop the truck 4 and the first cylinder 12 closes the claws 5 penetrating in the waste so as to seize a small amount of the waste (Fig. 3b). After a few seconds determined by a timer (not shown), the truck 4 is retracted by reverse rotation of the truck driving motor, during which the claws remain seizing the waste, until the dog 21 contacts the backward end limit switch 20 for the truck 4 to stop it (Fig. 3c). At the same time, the first cylinder 12 is actuated to open the claws 5 which are simultaneously pivotally moved downwardly about the rotary shaft 9 to eject the radioactive waste downwardly into a hopper (not shown) or the like (Fig. 3d). After a few seconds determined by a timer or the like, the second cylinder 16 is actuated to return the claws to its normal position (Fig. 3a). The above operation is repeated in the same manner to take the radioactive waste little by little out of the storage container 1 so as to be discharged into the hopper with safety and security.

Even if the waste in the storage container 1 decreases to an extent that the claws could not seize the waste, the forward and backward movements of the truck 4 and closing and opening of the claws 5 are preferably repeated a few times after the actuation of the forward end limit switch 19, in order to remove a small amount of the waste which would often remain in the container.

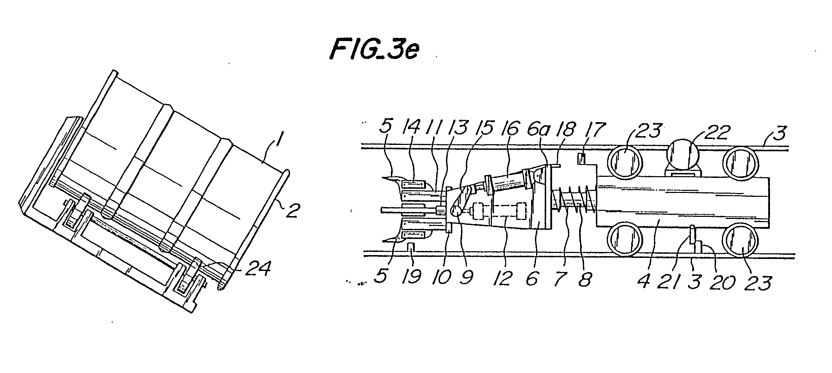

Moreover, even if all the waste is taken out of the storage container 1, there is often a small amount of the other radioactive waste such as fine dust, iron or steel scraps or the like. In order to exhaust all such a radioactive waste securely, the storage container 1 is rotated, while it is kept in a forwardly inclined position together with the container support means 24 as shown in phantom lines in Fig. 2, 3e.

Furthermore, the above operations are, in general, continuously automatically effected.

As can be seen from the above description, the apparatus according to the invention enables the radioactive waste filled in a storage container such as a drum can or the like to be exhausted safely and securely by automatically closing and opening claws provided on a truck, thereby exhausting the radioactive waste little by little without exposing operators to radiation. The apparatus according to the invention is, therefore, applicable to a treating operation for radioactive waste stored at nuclear power stations and is useful for industries.

## Claim

An apparatus for discharging a radioactive waste from its container comprising a truck (4) provided with driving means (22) and arranged opposite to an opening (2) of said container (1); seizing means provided on the truck adjacent to said opening (2) of the container (1) which seizing means includes claws (5) capable of closing and opening for seizing and releasing said radioactive waste (25); a first cylinder (12) connected to said seizing means for closing and opening said claws (5); a second cylinder (16) located between said truck (4) and said seizing means for tilting said seizing means downwardly; and a detector (17) arranged between said truck (4) and said seizing means (5) for detecting pressure caused by said seizing means (5) penetrating into said waste (25) when said truck (4) moves toward said opening (2) of said container (1) for taking said waste (25) therefrom, signals from said detector (17) being transmitted for stopping said truck (4) moving toward said container (1) and operating said first cylinder (12) to close said claws (5), means (24) for holding said container (1), tilting said container to lower said opening (2) and rotating said container (1), a limit switch (19) for stopping said truck (4) on a track (3) to locate said seizing means holding the waste in place where said seizing means ejects the waste, thereby transmitting signals from said limit switch (20) to said driving means (22) for said truck (4), to said first cylinder (12) for opening said claws (5) of said seizing means and to said second cylinder (16) for tilting said seizing means downwardly; and timing means for instructing said first cylinder (12) to give sufficient time to said claws (5) of said seizing means for seizing the waste (25), for instructing said second cylinder (16) to give sufficient time to said claws (5) of said seizing means for completely ejecting the waste (25) and thereafter to return said seizing means into its normal position, and for instructing said driving means (22) to drive said truck (4) toward said container (1) after said ejection of the waste (25).

## Patentanspruch

Vorrichtung zum Ausladen radioaktiven Abfalls aus einem Behälter, umfassend: einen mit Antriebsmitteln (22) versehenen Wagen (4), der gegenüber einer Öffnung (2) des Behälters (1) angeordnet ist; neben der Öffnung (2) des Behälters am Wagen vorgesehene Greifmittel, die umfassen: zu öffnende und zu schliessende Klauen (5) zum Erfassen und Loslassen des radioaktiven Abfalls (25), einen mit den Greifmitteln verbundenen ersten Zylinder (12) zum Schliessen und Öffnen der Klauen (5); einen zwischen dem Wagen (4) und den Greifmitteln angeordneten zweiten Zylinder (16) zum Nachuntenkippen der Greifmittel; und einen zwischen dem Wagen (4) und den Greifmitteln (5) angeordneten Detektor zum Erfassen des von den Greifmitteln (5) ausgeübten Druckes, wenn diese in den Abfall (25) dringen und wenn sich der Wagen (4) in Richtung auf die Öffnung (2) des Behälters (1) zum Entnehmen von Abfall (25) bewegt, wobei Signale dieses Detektors (17) für das Anhalten des sich auf den Behälter (1) zu bewegenden Wagens (4) und zum Betätigen des ersten Zylinders (12) für das Schliessen der Klauen (5) übertragen werden, wobei Mittel (24) zum Halten des Behälters (1), zum Kippen des Behälters für das Absenken der Öffnung (2) und zum Drehen des Behälters (1) ebenso vorgesehen sind, wie ein Grenzschalter (19) zum Anhalten des Wagens (4) auf einer Spur (3), um die den Abfall haltenden Greifmittel an einen Ort zu bringen, wo die Greifmittel den Abfall auswerfen, wodurch vom Grenzschalter (20) auf die Antriebsmittel (22) für den Wagen (4), auf den ersten Zylinder (12) zum Öffnen der Klauen (5) der Greifmittel und auf den zweiten Zylinder (16) zum Kippen der Greifmittel nach unten, Signale übertragen werden; und wobei ein Zeitglied vorgesehen ist, um den ersten Zylinder (12) so zu instruieren, dass er den Klauen (5) der Greifmittel genügend Zeit gibt, um den Abfall (25) zu greifen, für das Instruieren des zweiten Zylinders (16) dahingehend, dass den Klauen (5) der Greifmittel genügend Zeit gelassen wird, den Abfall (25) vollständig auszuwerfen und danach in die Normalstellung zurückzukehren, und schliesslich für das Instruieren der Antriebsmittel (22) für das Antreiben des Wagens (4) in Richtung auf den Behälter (1) nachdem der Abfall (25) ausgeworfen wurde.

## Revendication

Appareil pour décharger des déchets radioactifs de leur conteneur, comprenant un chariot (4) équipé d'un moyen (22) d'entraînement et monté en face d'one ouverture (2) du conteneur (1); un moyen de manipulation prévu sur le chariot au voisinage de l'ouverture (2) du conteneur (1), ce moyen de manipulation comprenant des pinces (5) qui peuvent se fermer et s'ouvrir pour saisir et relâcher les déchets radioactifs (25); un premier vérin (12) relié au moyen de manipulation pour fermet et ouvrir les pinces (5); un deuxième vérin (16) monté entre le chariot (4) et le moyen de manipulation pour basculer ce dernier vers le bas; et un détecteur (17) disposé entre le chariot (4) et le moyen (5) de manipulation pour détecter la pression produite par le moyen (5) de manipulation en pénétrant dans les déchets (25) lorsque le chariot (4) se déplace vers l'ouverture (2) du conteneur (1) afin d'en extraire ces déchets (25), des signaux émis par le détecteur (17) étant transmis pour arrêter le chariot (4) dans son déplacement vers le conteneur (1) et pour actionner le premier vérin (12) de manière à fermer les pinces (5), un moyen (24) pour maintenir le conteneur (1), basculer le conteneur afin d'abaisser l'ouverture (2) et faire tourner le conteneur (1), un interrupteur (19) de fin de course pour arrêter le chariot (4) sur une voie (3) afin de placer le moyen de manipulation maintenant les déchets en un endroit où ce moyen de manipulation éjecte les déchets, transmettant de ce fait des signaux de l'interrupteur (20) de fin de course au moyen (22) d'entraînement du chariot (4), au premier vérin (12) pour ouvrir les pinces (5) du moyen de manipulation et au deuxième vérin (16) pour basculer le moyen de manipulation vers le bas; et un moyen de synchronisation pour donner au premier vérin (12) des instructions telles que les pinces (5) du moyen de manipulation disposeront d'un temps suffisant pour saisir les déchets (25), pour donner au deuxième vérin (16) des instructions telles que les pinces (5) du moyen de manipulation disposeront d'un temps suffisant pour éjecter complètement les déchets (25) et pour ramener ensuite le moyen de manipulation dans sa position normale, et pour donner au moyen (22) d'entraînement des instructions telles qu'il entraînera le chariot (4) vers le conteneur (1) après l'éjection des déchets (25).

FIG.1

FIG.2

## FIG.3a

## FIG.3b

## FIG_3c

5 14 11 13 15 16 6a 18 17　　23　　22　　3

25

5　19　10　9　12　6　7　8　　4 21 3 20 23

## FIG_3d

5 14 11 13 15 16 6a 18 17　　23　　22　　3

5　10　9　12　6　7　8　　4 21 3 20 23

FIG.3e